## Europäisches Patentamt
## European Patent Office
## Office européen des brevets

(19)

(11) Veröffentlichungsnummer: **0 254 170**
**B1**

(12)

# EUROPÄISCHE PATENTSCHRIFT

(45) Veröffentlichungstag der Patentschrift:
03.10.90

(21) Anmeldenummer: 87110068.1

(22) Anmeldetag: 12.07.87

(51) Int. Cl.⁵: **B62B 3/10, G09F 25/00**

(54) Verfahren zum Versorgen verschiedener Abteilungen eines Grossmarktes mit abteilungsspezifischen Informationen.

(30) Priorität: 15.07.86 DE 3623878
07.05.87 DE 3715202
07.05.87 DE 3715203

(43) Veröffentlichungstag der Anmeldung:
27.01.88 Patentblatt 88/4

(45) Bekanntmachung des Hinweises auf die Patenterteilung:
03.10.90 Patentblatt 90/40

(84) Benannte Vertragsstaaten:
AT BE CH DE ES FR GB GR IT LI LU NL SE

(56) Entgegenhaltungen:
EP-A- 0 133 235
EP-A- 0 170 194
DE-U- 8 617 105
US-A- 4 156 318

(73) Patentinhaber: **Sonnendorfer, Horst, Ringstrasse 17, D-8031 Eichenau(DE)**
Patentinhaber: **Wieth, Franz, Ringstrasse 17, D-8031 Eichenau(DE)**

(72) Erfinder: **Sonnendorfer, Horst, Ringstrasse 17, D-8031 Eichenau(DE)**
Erfinder: **Wieth, Franz, Ringstrasse 17, D-8031 Eichenau(DE)**

(74) Vertreter: **von Kirschbaum, Albrecht, Dipl.-Ing., Hermann-Ehlers-Strasse 21a, D-8034 Germering(DE)**

## Beschreibung

Die Erfindung betrifft ein Verfahren zum Versorgen verschiedener Abteilungen eines mit einer Vielzahl Einkaufswagen bestückten Großmarktes mit abteilungsspezifischen Informationen nach dem Oberbegriff des Anspruchs 1 oder 2 (EP–A 00 133 235 oder EP–A 00 170 194). In Großmärkten werden die Kunden häufig über zentral gesteuerte Lautsprecherdurchsagen auf besonders vorteilhafte Angebote, Sonderangebote, neue Produkte u.ä. hingewiesen. Diese Lautsprecherdurchsagen erfolgen in vielen Fällen oft ohne Pause in immer derselben Reihenfolge. Solche verhältnismäßig lauten Durchsagen stellen auf die Dauer nicht nur eine Belästigung dar, sondern rufen auch aufgrund ständiger Wiederholungen bei dem Zuhörer ein zunehmendes Desinteresse hervor.

In der EP-A 00 133 235 ist ein üblicher, beispielsweise in Selbstbedienungsmärkten verwendeter Einkaufswagen beschrieben, bei welchem über dem an dessen Stirnseite vorgesehenen Schiebe-Handgriff eine Informationstafel quer zur Blickrichtung des den Wagen schiebenden Kunden angeordnet ist. Diese an Einkaufswagen angebrachte Informationstafel ist beispielsweise mit elektronischen Anzeigeelementen bestückt, welche vorzugsweise über einen Empfängerteil von stationären Sendern aus betätigbar sind. Sie können aber auch jeweils beim Schieben durch die einzelnen Einkaufsstraßen auf stationäre Sender ansprechen. Neben der elektronisch-optischen Anzeige ist auch eine akustische Wiedergabe über einen Flachlautsprecher in der Informationstafel möglich.

Ferner ist aus der EP-A 00 170 194 eine Vorrichtung zur Speicherung und Ausgabe von Informationsmengen über Waren oder dergleichen bekannt, welche eine Datenverarbeitungseinheit, eine Speichereinheit, ein mobiles Ausgabegerät sowie eine Abfrageeinheit aufweist. Hierbei können bei einer dezentralen Ausgestaltung die vorerwähnten Einheiten der bekannten Vorrichtung alle in einem Einkaufswagen untergebracht sein, so daß alle in der Vorrichtung gespeicherten Informationen mittels der Abfrageeinheit abgefragt werden können. Alternativ hierzu können jedoch die Speichereinheit und auch die Datenverarbeitungseinheit zentral angeordnet sein und über Leitungen mit dezentral angeordneten Empfangsund Sendeeinrichtungen verbunden sein. In diesem Fall ist dann jedes an bzw. in den Einkaufswagen untergebrachte Ausgabegerät mit entsprechenden Empfangs- und Sendeeinrichtungen versehen, wobei die Übertragung zwischen den dezentral angeordneten Empfangs- und Sendeeinrichtungen und den entsprechenden, an den Einkaufswägen angebrachten Einrichtungen drahtlos, beispielsweise mittels elektromagnetischer Wellen oder Infrarotstrahlen erfolgt.

Als weitere Variante ist auch eine teilweise dezentrale Anordnung möglich. In diesem Fall sind beispielsweise einer Anzahl von Verkaufswänden oder -regalen jeweils ein separater Speicher zugeordnet, in welchem dann unterschiedliche Informationsmengen gespeichert sind, welche zu den in dem jeweiligen Verkaufsregal befindlichen Produkten passen. Von den an bzw. in den Einkaufswagen untergebrachten und damit mobilen Ausgabegeräten kann dann vorzugsweise wieder drahtlos eine Verbindung zu den dezentral in den Verkaufswänden oder -regalen untergebrachten Speichern erfolgen, so daß ein Kunde auf diesem Wege von der mit jedem Ausgabegerät verbundenen Abfrageeinheit aus in Verbindung steht und gewünschte Informationen abfragen kann. Bei diesem bekannten System können somit die zentral oder dezentral bzw. teilweise dezentral gespeicherten Informationen jeweils von der an jedem Einkaufswagen an bzw. untergebrachten und mit einem Ausgabegerät verbundenen Abfrageeinheit abgefragt werden, wobei beispielsweise mittels dieser Abfrageeinheit aus einem Menu ausgewählt werden kann, so daß der Benutzer unter Zuhilfenahme der zentral oder dezentral untergebrachten Datenverarbeitungseinheit eine Art Dialog führen kann, wobei ihm dann die abgespeicherten Informationsmengen in der jeweils geeigneten Form zur Verfügung gestellt, übertragen und dargeboten werden. über einen an jedem Ausgabegerät vorgesehenen Lautsprecher können entsprechende Informationen auch akustisch abgegeben werden.

Ziel der Erfindung ist es daher, Verfahren zum Versorgen verschiedener Abteilungen eines mit einer Vielzahl Einkaufswagen bestückten Großmarktes mit abteilungsspezifischen Informationen zu schaffen, bei welchen den Kunden eines Großmarktes in den einzelnen Abteilungen gezielt immer ganz bestimmte, vorgegebene, abteilungsspezifische Informationen zugänglich gemacht werden, und gegebenenfalls eine effektiv abgegebene Information festgehalten werden kann. Ein weiteres Ziel der Erfindung ist es, ein derartiges Verfahren zu schaffen, bei welchem neben den abteilungsspezifischen Informationen zusätzlich auch noch den einzelnen Kunden u.U. interessierende Informationen ausgewählt und zugänglich gemacht werden können.

Gemäß der Erfindung ist dieses Ziel bei einem Verfahren nach dem Oberbegriff des Anspruchs 1 oder 2 durch die Verfahrensschritte im kennzeichnenden Teil des jeweiligen Anspruchs gelöst. Vorteilhafte Weiterbildungen der erfindungsgemäßen Verfahren sind Gegenstand der auf diese Patentansprüche unmittelbar oder mittelbar bezogenen Unteransprüche.

Bei dem erfindungsgemäßen Verfahren kann entweder jede der abteilungsspezifischen Informationen in einer zentralen Einrichtung digital aufbereitet und dann dort gespeichert oder aber nach einer entsprechenden, vorzugsweise zentral vorgenommenen Aufbereitung in einer der jeweiligen Abteilung zugeordneten und damit dezentralen Einrichtung digital gespeichert werden.

Bei zentraler Aufbereitung werden die gespeicherten Informationen in einem ganz bestimmten Zyklus zeitlich komprimiert, über Leitungen in serieller Form zu der jeweiligen Abteilung übertragen, in welcher dann die entsprechende Information drahtlos in den Bereich dieser Abteilung gesendet wird. Wenn jedoch die entsprechende, abteilungsspezifische Information bereits dezentral gespeichert .ist, braucht sie anschließend nur noch in einem bestimmten, vorgegebenen Zyklus zeitlich komprimiert in serieller Form drahtlos in den Bereich der jeweiligen Abteilung gesendet zu werden.

Die komprimiert übertragene Information wird dann jeweils mittels Einrichtungen der in der jeweiligen Abteilung befindlichen Einkaufswagen empfangen, da prinzipiell alle Einkaufswagen eines Großmarktes mit solchen Empfangseinrichtungen ausgestattet sind. In diesen Empfangseinrichtungen wird die komprimiert übertragene Information zwischengespeichert, auf die ursprüngliche Länge expandiert und dann in analoger Form im tonfrequenten Bereich wiedergegeben, d.h. für den Benutzer eines Einkaufswagens, der sich in der mit abteilungsspezifischen Informationen versorgten Abteilung befindet, hörbar gemacht.

Durch die Erfindung ist somit ein Informationssytem geschaffen, mit dessen Hilfe den Kunden eines Großmarktes u.ä. unterschiedliche, abteilungsspezifische Informationen gleichzeitig dezentral gezielt angeboten werden können, die während des Aufenthalts eines Kunden in der entsprechenden Abteilung im allgemeinen nur einmal hörbar gemacht werden. Gegebenenfalls kann an der Empfangseinrichtung eine Wiederholtaste vorgesehen sein, so daß der Kunde die letzte ihm als interessant in Erinnerung gebliebene Information nochmals gezielt abrufen kann.

Gemäß einer vorteilhaften Weiterbildung des erfindungsgemäßen Verfahrens können zusätzlich zu den jeweiligen abteilungsspezifischen Informationen auch noch spezielle, diese Informationen ergänzende Erläuterungsinformationen angeboten werden. Durch diese zusätzlichen Informationen können einem Kunden beispielsweise spezielle Erläuterungen und Erklärungen zu bestimmten Produkten übermittelt werden.

Ähnlich wie die abteilungsspezifischen Informationen können auch die zusätzlichen Informationen beispielsweise in einer zentralen Einrichtung digital aufbereitet, gespeichert und anschließend in einem der Übermittlung der abteilungsspezifischen Informationen angepaßten Zyklus zeitlich komprimiert mittels Leitungen zu der jeweiligen Abteilung übertragen und dort entweder in Bereitschaft gehalten oder aber fortlaufend in komprimierter Form abgegeben werden. Ferner können jedoch auch die speziellen Erläuterungsinformationen in den einzelnen Abteilungen zugeordneten und damit dezentral angebrachten Einrichtungen digital gespeichert, in einem bestimmten Zyklus komprimiert aufbereitet und ebenfalls entweder in Bereitschaft gehalten oder aber fortlaufend in komprimierter Form abgegeben werden.

Wenn nunmehr ein Kunde die jeweilige abteilungsspezifische Information gehört und zur Kenntnis genommen hat und zu dieser Information, die i.a. ein vorzustellendes Produkt betrifft, noch spezielle zusätzliche Informationen wünscht, kann er in derselben Abteilung beispielsweise durch gut sichtbar angebrachte Schilder, Beschriftungen u.ä. nicht nur auf die Möglichkeit solcher zusätzlicher Informationen, sondern auch durch eine stichwortartige Andeutung auf den Inhalt der verschiedenen zur Verfügung gestellten, zusätzlichen Informationen hingewiesen werden.

Hierbei sind die Hinweise auf zusätzliche Erläuterungen mit einer Kodierung, vorzugsweise in Form einer mehrstelligen Zahl versehen und entsprechend gekennzeichnet. Der Kunde hat dann lediglich die entsprechende Kodierung, d.h. beispeilsweise eine mehrstellige Zahl auswählen, welche dem Hinweis entspricht, durch welchen auf die ihn interessierenden, zusätzlichen Erläuterungen verwiesen ist. Die ausgewählte Kodierung hat der Kunde dann über eine an allen Einkaufswagen des Großmarktes angebrachte Tastatur einzugeben.

Bei einer Ausführungsform einer Einrichtung zur Durchführung des Verfahrens wird von der Tastatur aus die gewählte Kodierung drahtlos, beispielsweise mittels Infrarotlicht, Laserlicht, u.ä. an eine in jeder Abteilung vorgesehene Einrichtung übertragen, in welcher die zur Verfügung gestellten, zusätzlichen Erläuterungsinformationen in der beschriebenen Weise aufbereitet und in Bereitschaft gehalten sind. Nach dem Abrufen der ausgewählten Erläuterungsinformationen werden alle in Bereitschaft gehaltenen Erläuterungsinformationen in komprimierter Form seriell und drahtlos an die an den Einkaufswagen angebrachten Einrichtungen übertragen. Von den übertragenen Erläuterungsinformationen wird jedoch nur die gerade mittels der Kodierung ausgewählte Information expandiert und dann in analoger Form im tonfrequenten Bereich, d.h. akustisch wiedergegeben.

Bei der anderen Ausführungsform einer Einrichtung zur Durchführung des Verfahrens wird durch die über die Tastatur eingegebene Kennung aus den fortlaufend in komprimierter Form gesendeten, zusätzlichen Informationen, welchen beispielsweise eine der Kodierung entsprechende Kennzahl vorgestellt ist, nur die speziell ausgewählte Erläuterung ausgefiltert, expandiert und dann wieder, wie bei der zuerst erläuterten Ausführungsform, in analoger Form im tonfrequenten Bereich akustisch wiedergegeben, d.h. hörbar gemacht.

Das bedeutet, in der an jedem Einkaufswagen angebrachten Einrichtung wird anhand der vom Kunden ausgewählten Kodierung aus der Anzahl der in komprimierter Form übermittelten, zusätzlichen Erläuterungsinformationen nur die eine ausgewählt, expandiert und hörbar gemacht, welche der ausgewählten und eingegebenen Kodierung entspricht. Da hierzu in der am Einkaufswagen angebrachten Einrichtung von der Anzahl Erläuterungsinformationen nur die ebenfalls in komprimierter Form übertragene Anfangskodierung oder -kennzahl überprüft zu werden braucht, kann diese Überprüfung in Millisekunden durchgeführt und damit ebenfalls in Millisekunden die gewünschte Information ausgewählt und nach der geschilderten Aufbereitung akustisch wiedergegeben werden.

Aufgrund des bei dem erfindungsgemäßen Verfahrens vorgesehenen Übertragungsmodus ist in einfacher Weise sichergestellt, daß die nicht beeinflußbar übermittelte, abteilungsspezifische Information sowie die vom Kunden ausgewählten zusätzlichen Erläuterungsinformationen jeweils nur vollständig empfangen und damit auch immer vollständig, d.h. von Anfang an ohne irgendwelche Verstümmelungen und Auslassungen wiedergegeben werden.

Ferner ist ein Empfang in dem gesamten Bereich der Abteilung, für welche die dezentral übermittelten Informationen vorgesehen sind, unabhängig von dem Standort des benutzten Einkaufswagens und damit der an diesem angebrachten Empfangseinrichtung möglich.

Somit ist durch die Erfindung ein Verfahren zum Versorgen verschiedener Abteilungen eines Großmarktes mit abteilungsspezifischen Informationen sowie mit die abteilungsspezifischen Informationen ergänzenden, speziellen Erläuterungsinformationen geschaffen, die von einem interessierten Kunden frei wählbar abrufbar sind. Im Unterschied zu verschiedenen anderen, bisher vorgeschlagenen Verfahren sind jedoch bei dem erfindungsgemäßen Verfahren nicht spezielle genehmigungstechnische Voraussetzungen zu erfüllen. Zur Realisierung und praktischen Durchführung des Verfahrens ist kein großer apparatemäßiger Aufwand erforderlich, wie beispielsweise bei der Übertragung von modulierten, digital aufbereiteten Hochfrequenzsignalen, wo eine unverhältnismäßig große Bandbreite erforderlich ist.

Ein weiterer Vorteil des erfindungsgemäßen Verfahrens ist darin zu sehen, daß die Anzahl der mit Informationen zu versorgenden Abteilungen theoretisch beliebig groß sein kann, während beispielsweise bei multiplex mittels Hochfrequenz übertragenen Signalen die Anzahl der vorsorgbaren Abteilungen auf die Anzahl der zur Verfügung stehenden Kanäle begrenzt ist.

Obendrein erfolgt bei dem erfindungsgemäßen Verfahren die Übertragung durch die Informationen dezentral abgebende Einrichtung aufgrund der zeitlichen Komprimierung in einer sehr kurzen Zeit, so daß Einflüsse und dadurch bedingte Störungen, beispielsweise aufgrund des Bewegens oder Verschiebens der Wagen in den einzelnen Abteilungen, nicht nur stark vermindert, sondern im wesentlichen vernachlässigbar sind. Wie vorstehend schon ausgeführt, kann obendrein in einfacher Weise überwacht und sichergestellt werden, daß die übertragene Information immer von Anfang an und damit immer vollständig in den Empfangseinrichtungen gespeichert und somit von diesen aus immer vollständig wiedergegeben wird.

Vorzugsweise kann gemäß einer vorteilhaften Ergänzung des erfindungsgemäßen Verfahrens etwa gleichzeitig mit oder un mittelbar nach jeder akustischen Wiedergabe einer abteilungsspezifischen Information und/oder auch von einer oder mehreren zusätzlichen Erläuterungsinformationen, welche von der an einem Einkaufswagen angebrachten Einrichtung erfolgt ist, ein eine solche Informationsabgabe anzeigendes, vorzugsweise kodiertes Signal drahtlos an eine in der jeweiligen Abteilung vorgesehene Empfangseinrichtung gesendet und dort entweder registriert werden oder, mit einer abteilungsspezifischen Kennung versehen, an eine zentrale Speicher- und/oder Aufbereitungsanlage abgegeben werden. Das heißt, bei dem erfindungsgemäßen Verfahren wird bei jeder tonfrequenten Wiedergabe einer abteilungsspezifischen und/oder zusätzlichen Information durch ein drahtlos, beispielsweise mittels Infrarotlicht, Laserlicht u.ä. übertragenes Signal eine Bestätigung oder eine Art Rückquittierung gegeben, daß die für diese Abteilung spezifische Information und u.U. auch noch zusätzliche Erläuterungsinformationen nicht nur von der an jedem Einkaufswagen angebrachten Empfangseinrichtung empfangen, sondern auch entsprechend aufbereitet vor allem dem Kunden, welcher diese Abteilung aufgesucht hat, mittels der an jedem Einkaufswagen angebrachten Einrichtung hörbar gemacht worden ist.

Die Anzahl der in jeder Abteilung empfangenen Signale, durch welche die effektive, akustische Wiedergabe einer vorzugsweise abteilungsspezifischen Information an den Kunden bestätigt worden ist, wird dann entweder dezentral registriert und damit festgehalten oder aber die Signale werden - mit einer abteilungsspezifischen Kennung versehen - an eine zentrale Stelle weitergeleitet, wo dann z.B. eine Art Protokoll erstellt wird. Einem solchen Protokoll ist dann u.a. entnehmbar, wie oft eine abteilungsspezifische Durchsage u.U. ergänzt durch zusätzliche, ausgewählte Erläuterungsinformationen tatsächlich an den Kunden weitergegeben worden ist.

Ferner kann anhand eines solchen Protokolls leicht ermittelt werden, wie oft die kontinuierlich gesendete, abteilungsspe zifische Information tatsächlich an Kunden weitergegeben worden ist; diese Zahl gibt dann an, von wieviel Kunden die jeweilige Abteilung in einem bestimmten Zeitraum überhaupt aufgesucht worden ist. Darüber hinaus können gewisse Schlüsse hinsichtlich des Werbeeffekts einer solchen Durchsage gezogen werden, indem die Anzahl der an Kunden übermittelten Informationen, d.h. die Werbedurchsage, beispielsweise zu der Anzahl der gekauften Produkte in Beziehung gesetzt wird, auf welche sich die Werbedurchsage bezogen hat, oder auf welche durch Werbung speziell hingewiesen worden ist.

Gemäß einer bevorzugten Ausführungsform werden jede der abteilungsspezifischen Informationen sowie die zusätzlich zur Verfügung gestellten, ergänzenden Erläuterungsinformationen vorzugsweise in der zentralen Einrichtung mit mindestens der zweifachen maximalen tonfrequenten Signalfrequenz abgetastet und digitalisiert. Das bedeutet, wenn beispielsweise ein Sprachsignal mit maximal 3000 Hz übertragen werden soll, muß die Abtastfrequenz mindestens 6000 Hz betragen. Wenn dann beispielsweise eine Auflösung von 8 Bit vorgesehen ist, werden zur Übertragung von Informationen pro Sekunde 6000 Bytes benötigt; das heißt, bei einer Informationsdauer von beispielsweise 10s ist zum Speichern einer solchen Information mit einer Länge von 10s ein Speicher mit einer Kapazität von 60 kBytes oder von 480 kBits erforderlich.

Ein derartiges Sprachsignal mit einer maximalen Frequenz von 3000 Hz und einer Auflösung von 8 Bit, was 256 verschiedenen Quantisierungsstufen entspricht, kann mit Hilfe einer Abtastfrequenz von, wie vorstehend ausgeführt, mindestens 6kHz beispielsweise über einen Analog/Digital-(A/D)Umsetzer in einen RAM-Speicher mit einer Mindestkapazität von 60 kBytes gespeichert werden.

Die in einem solchen Speicher gespeicherte, abteilungsspezifische Information sowie die zusätzlichen, speziellen Erläuterungsinformation werden bei dem erfindungsgemäßen Ver fahren dadurch zeitlich komprimiert, daß sie mit einer Frequenz von beispielsweise etwa 60 kHz in paralleler Form aus dem Speicher ausgelesen, und über ein Schieberegister, das bei Verwenden von 9 Bit mit einer Taktfrequenz von 540 kHz angesteuert wird, in eine serielle Form umgesetzt werden. Das bedeutet in dem gewählten Beispiel, daß eine tonfrequente Information mit einer Länge von beispielsweise 10s aufgrund der vorstehend beschriebenen Maßnahmen auf etwa 1ms komprimiert worden ist. Diese komprimierte Information, die ursprünglich eine Dauer von beispielsweie 10s hatte, kann dann entweder von einer zentralen Einheit über Leitungen an die den jeweiligen Abteilungen zugeordneten Sender übertragen werden und dann von dort drahtlos beispielsweise mittels Infrarotlicht, Laserlicht u.ä. in den Bereich der jeweiligen Abteilung gesendet werden, oder aber die auf 1ms komprimierte Information kann bei einer dezentralen Aufbereitung und Verarbeitung unmittelbar über die gleichen Übertragungsmedien in den Bereich der jeweiligen Abteilung abgegeben werden.

Die in den Bereich einer Abteilung in komprimierter Form übertragene, abteilungsspezifische Information wird dann mittels der Empfangseinrichtungen der sich gerade dort befindlichen Einkaufswagen empfangen und in einem dieser Empfangseinrichtung zugeordneten Zwischenspeicher abgelegt. Aus diesem Speicher wird dann die Information mit einer Taktfrequenz abgerufen, welche zweckmäßigerweise vorzugsweise gleich der in der zentralen Einrichtung oder auch in den dezentral vorgesehenen Einrichtungen verwendeten Abtastfrequenz ist.

Hierdurch ist dann die in dem empfängerseitig vorgesehenen Speicher abgelegte Information wieder auf die ursprüngliche Informationsdauer von beispielsweise 10s expandiert, sobald sie über entsprechende Umsetzeinrichtungen umgesetzt ist. Durch den Umsetzeinrichtungen nachgeschaltete bekannte Einrichtungen wird die nunmehr in analoger Form vorliegende, abteilungsspezifische Information hörbar gemacht, indem sie beispielsweise über Kleinlautsprecher vorzugsweise gezielt in Richtung des den Einkaufswagen benutzenden Kunden abgestrahlt wird. Je nachdem, welche Ausführungsform einer Einrichtung zur Durchführung des erfindungsgemäßen Verfahrens gewählt ist, können letztendlich auch die frei wählbaren, zusätzlichen Erläuterungsinformationen über denselben Kleinlautsprecher abgegeben und damit hörbar gemacht werden.

Wie bereits erwähnt, können in bzw. an den Empfangseinrichtungen, welche zweckmäßigerweise an allen Einkaufswagen eines Großmarktes angebracht sind, entsprechende Einrichtungen vorgesehen sein, durch welche sichergestellt ist, daß eine in einer bestimmten Abteilung einmal hörbar gemachte abteilungsspezifische Information nicht mehr abgegeben wird. Hierzu kann die aufgenommene und bereits akustisch wiedergegebene, abteilungsspezifische Information beispielsweise nach einer gewissen Zeit in dem empfängerseitigen Speicher gelöscht werden, oder aber sie kann für einen eventuellen Abruf solange in dem empfängerseitigen Speicher gespeichert bleiben, bis die an dem jeweiligen Einkaufswagen angebrachte Empfangseinrichtung von einem Kunden in eine andere Abteilung gebracht wird.

Ferner sind den zu übertragenden Informationen, d.h. sowohl den abteilungsspezifischen Informationan als auch den zusätzlichen Erläuterungsinformationen, jeweils ein spezieller Kode in Form von Kennungsimpulsen vorgeschaltet, aufgrund deren Reihenfolge und Zusammensetzung jeweils erkannt und festgestellt werden kann, daß die empfangene Information von Anfang an übertragen und empfängerseitig gespeichert wird; gleichzeitig kann dadurch festgestellt werden, ob die empfangene Information identisch mit der eine gewisse Zeit vorher empfangenen Information ist oder ob es sich um eine andere für eine andere Abteilung spezifische Information handelt.

Hierbei läuft die durch eine zentrale Einrichtung gesteuerte oder dezentral vorgenommene Abstrahlung in einem ganz bestimmten Zyklus ab; beispielsweise erfolgt die dezentrale Abstrahlung der komprimiert übertragenen Information so, daß dazwischen immer Ruhepausen von beispielsweise 2 bis 3s vorgesehen sind. Auf diese Weise ist gewährleistet, daß innerhalb dieses kurzen Zeitraums dezentral jeweils die für die entsprechende Abteilung vorgesehene Information abgestrahlt und damit von den an den dort befindlichen Einkaufswagen angebrachten Empfangseinrichtungen innerhalb dieses kurz bemessenen Zeitraums jeweils von Anfang an unverändert und störungsfrei empfangen werden kann.

**Patentansprüche**

1. Verfahren zum Versorgen verschiedener Abteilungen eines mit einer Vielzahl Einkaufswagen bestückten Großmarktes mit abteilungsspezifischen Informationen, welche jeweils in einer zentralen Einrichtung gespeichert, mittels Leitungen zu den jeweiligen Abteilungen übertragen und dort drahtlos gesendet werden, und welche jeweils mittels Empfangseinrichtungen der in den jeweiligen Abteilungen befindlichen Einkaufswagen empfangen und wiedergegeben werden, dadurch gekennzeichnet, daß jede der abteilungsspezifischen Informationen vor der zentralen Speicherung digital aufbereitet, anschließend in einem bestimmten Zyklus zeitlich komprimiert und nach der über die Leitungen erfolgten Übertragung zu der jeweiligen Abteilung dort dann in serieller Form drahtlos übermittelt wird, und daß die komprimiert übertragenen Informationen nach dem Empfang mittels der Empfangseinrichtungen der in der jeweiligen Abteilung befindlichen Einkaufswagen zwischengespeichert und schließlich auf die ursprüngliche Informationsdauer expandiert in analoger Form im tonfrequenten Bereich wiedergegeben wird.

2. Verfahren zum Versorgen verschiedener Abteilungen eines mit einer Vielzahl Einkaufswagen bestückten Großmarktes mit abteilungsspezifischen Informationen, welche jeweils in einer der jeweiligen Abteilung zugeordneten Einrichtung dezentral gespeichert, von dort drahtlos übertragen und nach Empfang mittels Empfangseinrichtungen der in der jeweiligen Abteilung befindlichen Einkaufswagen wiedergegeben werden, dadurch gekennzeichnet, daß jede der abteilungsspezifischen Informationen digital gespeichert, anschließend in einem bestimmten Zyklus zeitlich komprimiert und dann in serieller Form drahtlos übertragen wird, und daß die komprimiert übertragene Information nach dem Empfang zwischengespeichert, auf die ursprüngliche Informationsdauer expandiert und dann in analoger Form im tonfrequenten Bereich wiedergegeben wird.

3. Verfahren nach Anspruch 1, dadurch gekennzeichnet, daß zusätzlich zu den abteilungsspezifischen Informationen in der zentralen Einrichtung noch spezielle, die abteilungsspezifischen Informationen ergänzende Erläuterungsinformationen digital aufbereitet, gespeichert, in einem der Übermittlung der abteilungsspezifischen Informationen angepaßten Zyklus zeitlich komprimiert mittels der Leitungen zu der jeweiligen Abteilung übertragen und dort in Bereitschaft gehalten werden, und daß eine der in der jeweiligen Abteilung in Bereitschaft gehaltenen Erläuterungsinformationen über eine – an allen Einkaufswagen eines Großmarktes angebrachte – Tastatur frei wählbar drahtlos abrufbar ist, daß dann nach dem Abrufen der ausgewählten Erläuterungsinformation alle in Bereitschaft gehaltenen Erläuterungsinformationen in komprimierter Form seriell an die an den Einkaufswagen angebrachten Einrichtungen übertragen werden, aber von allen komprimiert übertragenen Erläuterungsinformationen nur die vorher ausgewählte Erläuterungsinformation expandiert und dann in analoger Form akustisch wiedergegeben wird.

4. Verfahren nach Anspruch 1, dadurch gekennzeichnet, daß zusätzlich zu den abteilungsspezifischen Informationen in der zentralen Einrichtung noch spezielle, die abteilungsspezifischen Informationen ergänzende Erläuterungsinformationen digital aufbereitet, gespeichert, in einem der Übermittlung der abteilungsspezifischen Informationen angepaßten Zyklus zeitlich komprimiert, mittels Leitungen zu der jeweiligen Abteilung übertragen und in diese Abteilung ständig in komprimierter Form gesendet werden, und daß eine beliebige der in der jeweiligen Abteilung durch fortwährendes Senden zur Verfügung gestellten Erläuterungsinformationen durch eine - an allen Einkaufswagen eines Großmarktes angebrachte - Tastatur frei auswählbar ist, anschließend in den an den Einkaufswagen angebrachten Einrichtungen expandiert und dann in analoger Form akustisch wiedergegeben wird.

5. Verfahren nach Anspruch 2, dadurch gekennzeichnet, daß zusätzlich zu den abteilungsspezifischen Informationen in einer der jeweiligen Abteilung zugeordneten Einrichtung dezentral noch spezielle, die abteilungsspezifischen Informationen ergänzende Erläuterungsinformationen digital gespeichert, in einem bestimmten Zyklus zeitlich komprimiert aufbereitet und in Bereitschaft gehalten werden, und daß eine beliebige der in der jeweiligen Abteilung in Bereitschaft gehaltenen Erläuterungsinformationen mittels einer - an allen Einkaufswagen eines Großmarktes angebrachten - Tastatur frei wählbar drahtlos abrufbar ist, daß dann bei Abruf einer gewählten Erläuterungsinformation alle in Bereitschaft gehaltenen Erläuterungsinformationen in komprimierter Form an die an den Einkaufswagen angebrachten Empfangseinrichtungen seriell übertragen werden, aber von allen komprimiert in serieller Form übertragenen Erläuterungsinformationen nur die vorher ausgewählte Erläuterungsinformation expandiert und in analoger Form akustisch wiedergegeben wird.

6. Verfahren nach Anspruch 2, dadurch gekennzeichnet, daß zusätzlich zu den abteilungsspezifischen Informationen in einer der jeweiligen Abteilung zugeordneten Einrichtung dezentral noch spezielle, die abteilungsspezifischen Informationen ergänzende Erläuterungsinformationen digital gespeichert, in einem bestimmten Zyklus zeitlich komprimiert aufbereitet und in dieser Form ständig in die Abteilung gesendet werden, und daß eine beliebige der in der jeweiligen Abteilung durch das fortwährende Senden zur Verfügung gestellten Erläuterungsinformationen mittels einer - an allen Einkaufswagen eines Großmarktes angebrachten - Tastatur frei auswählbar ist, anschließend in den an den Einkaufswagen angebrachten Einrichtungen expandiert und dann in analoger Form akustisch wiedergegeben wird.

7. Verfahren nach einem der Ansprüche 3 bis 6, dadurch gekennzeichnet, daß nach einer akustischen Wiedergabe einer ausgewählten Erläuterungsinformation dieselbe oder andere in Bereitschaft gehaltene oder ständig gesendete Erläuterungsinformationen über die an den Einkaufswagen angebrachte Tastatur abrufbar bzw. auswählbar ist, worauf die vorher ausgewählte Erläuterungsinformation gelöscht wird, daß anschließend wieder alle in Bereitschaft gehaltenen bzw. ohnehin ständig gesendeten Erläuterungsinformationen in komprimierter Form seriell an die Empfangseinrichtung des in der jeweiligen Abteilung befindlichen Einkaufswagens übertragen und empfangen werden, und daß nur die nunmehr ausgewählte Erläuterungsinformation, auf die ursprüngliche Informationsdauer expandiert, in analoger Form akustisch wiedergegeben wird.

8. Verfahren nach einem der vorhergehenden Ansprüche dadurch gekennzeichnet, daß etwa gleichzeitig mit oder unmittelbar nach jeder akustischen Wiedergabe einer abteilungsspezifischen Information oder gegebenenfalls vor zusätzlichen Erläuterungsinformationen ein diese Informationsabgabe anzeigendes, vorzugsweise kodiertes Signal drahtlos an eine in der jeweiligen Abteilung vorgesehene Empfangseinrichtung gesendet und dort registriert wird oder, mit einer Abteilungskennung versehen, an eine zentrale Speicher- und/oder Aufbereitungseinrichtung weitergeleitet wird.

9. Verfahren nach einem der Ansprüche 1 oder 4, dadurch gekennzeichnet,

a1) daß jede der abteilungsspezifischen Informationen und/oder der zusätzlichen Erläuterungsinformationen in der zentralen Einrichtung mit mindestens der zweifachen, maximalen (tonfrequenten) Signalfrequenz abgetastet digitalisiert, anschließend mit der Abtastfrequenz in paralleler Form in jeweils einem jeder der Abteilungen zugeordneten Speicher gespeichert, dann mit einem bestimmten Zyklus zeitlich komprimiert mit einer wesentlich höheren Frequenz mittels Draht zu der jeweiligen Abteilung übertragen, und dann drahtlos seriell in den Bereich der jeweiligen Abteilung gesendet wird,

b1) daß die komprimiert übertragene abteilungsspezifische Information mittels der Empfangseinrichtungen der in der jeweiligen Abteilung befindlichen Einkaufswagen empfangen, in einem empfängerseitigen Speicher zwischengespeichert und aus diesem mit einer Taktfrequenz, die vorzugsweise gleich der in der zentralen Einrichtung verwendeten Abtastfrequenz ist, expandiert über Umsetzeinrichtungen abgerufen und in analoger Form im tonfrequenten Bereich wiedergegeben wird, und

b2) daß aus den komprimiert übertragenen, zusätzlichen Erläuterungsinformationen mittels einer - an allen Einkaufswagen eines Großmarktes angebrachten - Tastatur eine gewünschte Erläuterungsinformation frei auswählbar ist, die über Umsetzeinheiten auf ihre ursprüngliche Länge expandiert und dann in analoger Form im tonfrequenten Bereich wiedergegeben wird.

10. Verfahren nach einem der vorhergehenden Ansprüche, dadurch gekennzeichnet, daß die akustische Wie dergabe der abteilungsspezifischen und der zusätzlichen Informationen mit Hilfe spezieller Kennungsimpulse so gesteuert wird, daß die jeweilige Information immer nur von Anfang und vollständig wiedergegeben werden.

**Revendications**

1. Procédé pour délivrer, à différents rayons d'un supermarché équipé d'un grand nombre de caddies, des informations qui sont spécifiques auxdits rayons, sont respectivement mémorisées dans un dispositif central, sont transmises, au moyen de conducteurs, aux rayons considérés dans lesquels elles sont transmises sans câble, puis sont respectivement reçues et restituées au moyen de dispositifs récepteurs des caddies situés dans les rayons considérés, caractérisé par le fait que chacune des informations spécifiques aux rayons est élaborée numériquement préalablement à la mémorisation centrale, est ensuite comprimée temporellement en un cycle déterminé, pour être ensuite, à l'issue de la transmission au rayon considéré, ayant eu lieu par l'intermédiaire des conducteurs, retransmise dans ledit rayon, sans câble et sous forme sérielle; et que, à l'issue de la réception au moyen des dispositifs récepteurs des caddies situés dans le rayon considéré, les informations transmises de manière condensée sont mémorisées provisoirement, puis sont finalement restituées sous forme analogique, dans la plage à fréquence vocale, après expansion jusqu'à la durée d'information originelle.

2. Procédé pour délivrer, à différents rayons d'un supermarché équipé d'un grand nombre de caddies, des informations qui sont spécifiquer auxdits rayons, sont respectivement mémorisées de manière décentralisée dans un dispositif associé au rayon considéré, à partir duquel elles sont transmises sans câble, puis sont restituées après réception au moyen de dispositifs récepteurs des caddies situés dans le rayon considéré, caractérisé par le fait que chacune des informations spécifiques aux rayons est mémorisée numériquement, est ensuite comprimée temporellement en un cycle déterminé, puis est transmise sans câble, sous forme sérielle; et que, à l'issue de la réception, l'information transmise de manière comprimée est mémorisée provisoirement, est soumise à expansion jusqu'à la durée d'information originelle, puis est restituée sous forme analogique dans la plage à fréquence vocale.

3. Procédé selon la revendication 1, caractérisé par le fait que, en plus des informations spécifiques aux rayons, des informations explicatives spéciales, complétant lesdites informations spécifiques aux rayons, sont encore élaborées numériquement dans le dispositif central, sont mémorisées, sont comprimées temporellement en un cycle adapté à la retransmission des informations spécifiques aux rayons, puis sont transmises, au moyen des conducteurs, au rayon considéré dans lequel elles sont maintenues en attente; et que l'une des informations explicatives maintenues en attente dans le rayon considéré peut être appelée sans câble, avec libre choix, par l'intermédiaire d'un clavier – installé sur tous les caddies d'un supermarché – et, après l'appel de l'information explicative sélectionnée, toutes les informations explicatives maintenues en attente sont transmises sériellement, sous forme comprimée aux dispositifs implantés sur les caddies, mais, parmi toutes les informations explicatives transmises de manière comprimée seule l'information explicative préalablement sélectionnée est soumise à expansion pour être ensuite restituée acoustiquement, sous forme analogique.

4. Procédé selon la revendication 1, caractérisé par le fait que, en plus des informations spécifiques aux rayons, des informations explicativer spéciales, complétant lesdites informations spécifiques aux rayons, sont encore élaborées numériquement dans le dispositif central, sont mémorisées, sont temporellement en un cycle adapté à la retransmission des informations spécifiques aux rayons, sont transmises au rayon considéré, au moyen de conducteurs, puis sont délivrées en permanence à ce rayon, sous forme comprimée; et que l'une quelconque des informations explicatives, mises à disposition par émission permanente dans le rayon considéré, peut être librement sélectionnée par l'intermédiaire d'un clavier – installé sur tous les caddies d'un supermarché –, est ensuite soumise à expansion dans les dispositifs implantés sur les caddies, puis est restituée acoustiquement sous forme analogique.

5. Procédé selon la revendication 2, caractérisé par le fait que, en plus des informations spécifiques aux rayons, des informations explicatives spéciales, complétant lesdites informations spécifiques aux rayons, sont encore mémorisées numériquement et de manière décentralisée dans un dispositif associé au rayon considéré, sont élaborées avec condensation temporelle en un cycle déterminé, puis sont maintenues en attente; et que l'une quelconque des informations explicatives maintenues en attente dans le rayon considéré peut être appelée sans câble, avec libre choix, au moyen d'un clavier – installé sur tous les caddies d'un supermarché – et, lors de l'appel d'une information explicative sélectionnée, toutes les informations explicatives maintenues en attente sont transmises sériellement, sous forme comprimée aux dispositifs récepteurs implantés sur les caddies, mais, parmi toutes les informations explicatives transmises sous forme sérielle et comprimée seule l'information explicative préalablement sélectionnée est soumise à expansion, puis restituée acoustiquement sous forme analogique.

6. Procédé selon la revendication 2, caractérisé par le fait que, en plus des informations spécifiques aux rayons, des informations explicatives spéciales, complétant lesdites informations spécifiques aux rayons, sont encore mémorisées numériquement de manière décentralisée dans un dispositif associé au rayon considéré, pour être ensuite élaborées avec compression temporelle en un cycle déterminé, puis délivrées en permanence au rayon sous cette forme; et que l'une quelconque des informations explicatives, mises à disposition par l'émission permanente dans le rayon considéré, peut être librement sélectionnée au moyen d'un clavier – installé sur tous les caddies d'un supermarché –, est ensuite soumise à expansion dans les dispositifs implantés sur les caddies, puis est restituée acoustiquement sous forme analogique.

7. Procédé selon l'une des revendications 3 à 6, caractérisé par le fait que, après une restitution acoustique d'une information explicative sélectionnée, la même information explicative, ou bien d'autres informations explicatives maintenues en attente ou délivrées en permanence, peuvent être respectivement appelées ou sélectionnées par l'intermédiaire du clavier installé sur les caddies, après quoi l'information explicative préalablement sélectionnée est effacée; par le fait que, dans l'enchaînement, toutes les informations explicatives respectivement maintenues en attente, voire délivrées en permanence, sont de nouveau transmises et reçues sériellement, sous forme comprimée dans le dispositif récepteur du caddy situé au rayon considéré; et par le fait que seule l'information explicative désormais sélectionnée est restituée acoustiquement sous forme analogique, après expansion jusqu'à la durée d'information originelle.

8. Procédé selon l'une des revendications précédentes, caractérisé par le fait que, à peu près simultanément à chaque restitution acoustique, ou directement après chaque restitution acoustique d'une information spécifique à un rayon, voire éventuellement avant des informations explicatives additionnelles, un signal de préférence codé, indicatif de cette délivrance d'information, est appliqué sans câble à un dispositif récepteur prévu dans le rayon considéré, dans lequel il est enregistré, ou bien est transmis, pourvu d'une caractérisation d'un rayon, à un dispositif central de mémorisation et/ou d'élaboration.

9. Procédé selon l'une des revendications 1 ou 4, caractérisé par le fait

a1) que chacune des informations spécifiques aux rayons et/ou des informations explicatives additionnelles est numérisée dans le dispositif central, avec exploration à au moins la fréquence double maximale du signal (à fréquence vocale), est ensuite mémorisée à la fréquence d'explorations sous forme parallèle, dans une mémoire respective associée à chacun des rayons, pour être ensuite transmise par câble au rayon considéré, à une fréquence notablement supérieure et avec condensation temporelle en un cycle déterminé, puis délivrée sériellement, sans câble, au voisinage du rayon considéré;

b1) que l'information spécifique au rayon, transmise de manière condensée, est reçue au moyen des dispositifs récepteurs des caddies situés dans le rayon considéré, est mémorisée provisoirement dans une mémoire située côté réception, puis est appelée hors de cette dernière, avec expansion par l'intermédiaire de dispositifs de transformation, à une fréquence d'horloge qui est préférentiellement identique à la fréquence d'exploration utilisée dans le dispositif central, pour être restituée sous forme analogique dans la plage à fréquence vocale; et

b2) que, parmi les informations explicatives additionnelles transmises de manière condensée, une information explicative souhaitée peut être librement sélectionnée au moyen d'un clavier – installé sur tous les caddies d'un supermarché –, ladite information étant soumise, par l'intermédiaire d'unités de transformation, à expansion jusqu'à sa longueur originelle, puis restituée sous forme analogique dans la plage à fréquence vocale.

10. Procédé selon l'une des revendications précédentes, caractérisé par le fait que la restitution acoustique des informations spécifiques aux rayons et des informations additionnelles est commandée, à l'aide d'impulsions d'identification spéciales, de telle sorte que l'information considérée soit toujours restituée seulement depuis le début, et de manière intégrale.

**Claims**

1. A method for delivering to different departments of a supermarket equipped with a plurality of shopping carts department-specific informations which are digitally stored in central control equipment, subsequently transmitted on lines to the respective department and transmitted there in a wireless manner to be received and reproduced by the receiving units of the shopping carts within the respective department, wherein each of said department-specific informations is digitally processed before being stored in the central control equipment, subsequently time-compressed in a certain cycle and, after having been transmitted on lines to the respective department, serially transmitted in a wireless manner; and wherein each information transmitted in compressed form and having been received by the receiving units of the shopping carts within the respective department, is temporarily stored and, after expansion to the original information length, finally reproduced in analogous form in the audio-frequency range.

2. A method for delivering to different departments of a supermarket equipped with a plurality of shopping carts department-specific informations which are stored in decentralized equipment associated with the respective department, transmitted from there in a wireless manner and reproduced after having been received by the receiving units of the shopping carts within the respective department, wherein each of said department-specific informations is digitally stored, subsequently time-compressed in a certain cycle, and serially transmitted in a wireless manner; and wherein each information transmitted in compressed form and having been received is temporarily stored, expanded to the original information length, and subsequently reproduced in analogous form in the audio-frequency range.

3. The method according to Claim 1 wherein, besides department-specific informations, additional informative items complementing said department-specific informations are digitally processed, stored, time-compressed in a cycle adapted to the transmission cycle of the department-specific informations, and transmitted on lines to the respective department where they are kept at stand-by; wherein each additional informative item kept at stand-by in the respective department can be independently recalled in a wireless manner by means of a keyboard provided on every shopping cart of the supermarket; and wherein, on recall of the selected informative item, all additional informative items kept on stand-by are serially transmitted in compressed form to the units provided on the shopping carts while of all the additional informative items transmitted in compressed form, only the previously selected informative item is expanded and reproduced in analogous form.

4. The method according to Claim 1 wherein, besides department-specific informations, additional informative items complementing said department-specific informations are digitally processed in the central control equipment, stored, time-compressed in a cycle adapted to the transmission cycle of the department-specific informations, transmitted on lines to the respective department, and continually transmitted in compressed form into the department area; and wherein any one of said additional informative items made available within the respective department area through continual transmission can be independently selected by means of a keyboard provided on every shopping cart to be subsequently expanded in the units provided on the shopping carts and acoustically reproduced in analogous form.

5. The method according to claim 2 wherein, besides department-specific information, additional informative items illustrating the department-specific information are digitally stored in decentralized devices associated with the respective department, are time-compressed in a certain cycle and kept at stand-by; wherein any one of the additional informative items kept at stand-by in the respective department can be independently selected and recalled in a wireless manner by means of a keyboard provided on every shopping cart of the shopping center; and wherein, on recall of a selected informative item, all additional informative items kept at stand-by are serially transmitted in time-compressed form to the receiving unit of the shopping cart where, of all the serially transmitted time-compressed informative items, only the previously selected item is expanded and acoustically reproduced in analogous form.

6. The method according to claim 2 wherein, besides department-specific information, additional informative items illustrating the department-specific information are digitally stored in decentralized devices associated with the respective department, are time-compressed in a; certain cycle and continuously transmitted in time-compressed form into the department area; and wherein any one of the additional informative items continuously transmitted into the department area can be independently selected and recalled by means of a keyboard provided on every shopping; cart of the shopping center, the selected informative item being then expanded and acoustically reproduced in analogous form by appropriate means provided on the shopping cart.

7. The method according to any of claims 3 to 6 wherein, after acoustic reproduction of a selected additional informative item, the same or some other informative item kept at stand-by or being continuously transmitted can be selected and recalled by means of the keyboard provided on each shopping cart, whereupon the previous selection is cancelled, and all additional informative items, either kept at stand-by or being continuously transmitted, are again serially transmitted in time-compressed form to the receiving unit of the shopping cart within the department area where only the newly selected informative item is expanded to the original information length and reproduced in analogous form.

8. The method according to any one of the preceding claims wherein, together with or immediately following each acoustic reproduction of department-specific information or optionally before acoustic reproduction of additional informative items, a preferably coded signal indicating effective delivery of such information is sent by wireless transmission to a receiving device within the respective department, where the signal is either recorded or, completed by a department-specific code, transmitted to the central storing and/ or processing equipment.

9. The method according to any of claims 1 to 4 wherein:

(a1) any department-specific information or additional informative item is read and digitally processed in the central control equipment at a rite of at least twice the maximum frequency of the (audio-frequency) signal, is stored in parallel form at the sampling rate in a memory associated with the respective department, transmitted on lines in time-compressed form and in a certain cycle at a considerably higher rate to the respective department to be serially sent by wireless transmission into the department area;

(b1) any department-specific information transmitted in timecompressed form is received by the receiving unit of any shopping cart within the department area, is filed in a temporary store at the receiving end, recalled therefrom by converting means in expanded form at a clock rate preferably equal to the sampling rate used in the central control equipment, and subsequently reproduced in analogous form in the audio-frequency range; and

(b2) any desired additional informative item can be selected from the transmitted, time-compressed informative items by means of a keyboard provided on every shopping cart of the shopping center, the selected informative item being then expanded by converting means to the original information length and reproduced in analogous form in the audio-frequency range.

10. The method according to any one of the preceding claims wherein acoustic reproduction of department-specific information and additional informative items is controlled by means of identifying pulses in such a manner that any information is acoustically reproduced in complete form from beginning to end.